# EUROPEAN PATENT APPLICATION

(11) **EP 4 575 784 A1**
(43) Date of publication of application: **25.06.2025**
(21) Application number: 23870257.5
(22) Date of filing: 08.09.2023
(51) Int. Cl.: G06F 9/50

(54) **MEMORY MANAGEMENT METHOD AND RELATED DEVICE**

(30) Priority: 28.09.2022 CN 202211187534
(71) Applicant: Huawei Technologies Co., Ltd., Shenzhen, Guangdong 518129 (CN)
(72) Inventor: ZHU, Caixi, Shenzhen, Guangdong 518129 (CN)
(74) Representative: Huawei European IPR
(86) International application number: PCT/CN2023/117661
(87) International publication number: WO 2024/067018

(57) **Abstract**

A memory management method and a related device are provided. The method may include: determining N processes, where virtual addresses of all the N processes are the same, physical addresses corresponding to the virtual addresses of all the processes are the same, the processes have different permissions, and N is an integer greater than or equal to 2 (S200); establishing an address mapping table and N permission tables for the N processes, where each of the processes corresponds to one of the N permission tables, the address mapping table includes a mapping relationship between the virtual address and the physical address, and each of the N permission tables includes permission information of a corresponding process at the physical address (S201); and when an i^{th} process in the N processes is run, processing, based on the address mapping table and a permission table corresponding to the i^{th} process, data corresponding to the physical address, where i is 1, 2, ..., or N (S202). According to the method, memory overheads can be reduced.

## Description

This application claims priority to Chinese Patent Application No. 202211187534.0, filed with the China National Intellectual Property Administration on September 28, 2022 and entitled "MEMORY MANAGEMENT METHOD AND RELATED DEVICE", which is incorporated herein by reference in its entirety.

### TECHNICAL FIELD

This application relates to the field of computer technologies, and in particular, to a memory management method and a related device.

### BACKGROUND

In an early stage of using a computer, to run a program (or thread), the entire program (or thread) needs to be stored in a memory, that is, the program (or thread) is directly run in the memory, and memory addresses accessed by the program (or thread) are actual physical memory addresses. Such an address access manner has no isolation among address spaces, low memory usage efficiency, uncertainty of a running address, and the like. To resolve these problems, a method for accessing a physical memory using an indirect address emerges. A memory address accessed by a program (or thread) during running is a virtual address instead of an actual physical memory address, and then the virtual address is mapped to a proper physical memory address, to implement memory management. A common memory management manner usually includes segmentation, paging, or segment/paging management.

However, as chips continuously develop in scale, the memory becomes larger, and an amount of data used for memory management increases accordingly. The data is typically stored in the memory, and consequently, the data consumes more memory spaces. For example, an existing advanced reduced instruction set computer machine (Advanced RISC Machine, ARM) architecture and an X86 architecture typically use a paging-based memory page table management mechanism, which has good universality but high memory overheads. Insufficiency of physical memories may seriously affect computer performance, and reducing memory overheads becomes an important way to ensure computer performance when an upper limit of a size of the memory is limited. Therefore, how to provide a memory management method to reduce memory overheads is an urgent problem to be resolved.

### SUMMARY

Embodiments of this application provide a memory management method and a related device, to reduce memory overheads during memory management.

According to a first aspect, an embodiment of this application provides a memory management method. The method may include: determining N processes, where virtual addresses of all the N processes are the same, physical addresses corresponding to the virtual addresses of all the processes are the same, and N is an integer greater than or equal to 2; establishing an address mapping table and N permission tables for the N processes, where each of the processes corresponds to one of the N permission tables, the address mapping table includes a mapping relationship between the virtual address and the physical address, and each of the N permission tables includes permission information of a corresponding process at the physical address; and when an i^{th} process in the N processes is run, processing, based on the address mapping table and a permission table corresponding to the i^{th} process, data corresponding to the physical address, where i is 1, 2, ..., or N.

In embodiments of this application, according to the memory management method, a memory management unit or a system memory management unit may establish the address mapping table for the N processes that have same virtual addresses corresponding to same physical addresses, but have different permissions; and establish a corresponding permission table for each process, to obtain the N permission tables. Therefore, the N processes can share the address mapping table during running. The foregoing solution is different from the conventional technology. In the conventional technology, N page tables need to be established for N processes that have same virtual addresses corresponding to same physical addresses, but have different permissions. Address information in the N page tables is the same (that is, the virtual addresses are the same, and the physical addresses corresponding to the virtual addresses are the same), and only permission information is different. However, the address information part including an address mapping relationship occupies more resources in a data structure than the permission information part. Therefore, according to the memory management method provided in embodiments of this application, an address information part and a permission information part are separated, so that a plurality of processes can share the address information. This can reduce memory overheads arising from memory management, and ensure computer performance.

In a possible implementation, the processing, based on the address mapping table and a permission table corresponding to the i^{th} process, data corresponding to the physical address includes: determining, based on the address mapping table, a physical address that can be accessed by the i^{th} process; determining a permission of the i^{th} process based on the permission table corresponding to the i^{th} process; and performing, using the i^{th} process, processing corresponding to the permission on the data corresponding to the physical address.

In embodiments of this application, when any one of the plurality of processes is run, the memory management unit or the system memory management unit may determine, based on the address mapping table, a physical address that can be accessed by the process, and determine a permission of the process based on a permission table corresponding to the process, to perform, via the process, corresponding processing on data at the accessible physical address. A processing permission is the same as the permission represented by the permission table, that is, the plurality of processes can share the address mapping table during running, to reduce memory overheads arising from memory management, and ensure computer performance.

In a possible implementation, the determining N processes includes: obtaining a virtual address of each of M processes, where M is an integer greater than or equal to N; determining a physical address corresponding to the virtual address of each of the M processes; and determining, from the M processes, the N processes that have same virtual addresses corresponding to same physical addresses.

In embodiments of this application, the memory management unit or the system memory management unit may determine, from the M processes, the N processes that have same virtual addresses corresponding to same physical addresses, but have different permissions, to ensure feasibility and accuracy of the memory management method, and ensure a reduction in memory overheads.

In a possible implementation, the establishing an address mapping table and N permission tables for the N processes includes: establishing the address mapping table based on the virtual addresses of the N processes and the corresponding physical addresses; and establishing a permission table based on permission information of each of the N processes, to obtain the N permission tables.

In embodiments of this application, after determining the virtual addresses of the N processes, the physical addresses corresponding to the virtual addresses, and a permission of each process, the memory management unit or the system memory management unit may establish the address mapping table based on the virtual addresses and the corresponding physical addresses, and respectively establish a permission table based on the permission corresponding to each of the N processes, to obtain the N permission tables, so that the N processes can share the address mapping table during running. This reduces memory overheads arising from memory management, and ensures computer performance.

In a possible implementation, each of the N permission tables includes permission start address information and permission end address information, and an address range corresponding to the permission start address information and the permission end address information of the permission table corresponding to the i^{th} process includes an address range corresponding to the physical address that can be accessed by the i^{th} process.

In embodiments of this application, when establishing the permission tables, the memory management unit or the system memory management unit may design the permission table based on a range table, so that each permission table includes the permission start address information and the permission end address information. Therefore, the permission table can flexibly specify permissions of one or more address ranges, to meet requirements of more complex scenarios. The address range corresponding to the permission start address information and the permission end address information of the permission table corresponding to the i^{th} process includes the address range corresponding to the physical address that can be accessed by the i^{th} process.

In a possible implementation, the address mapping table further includes universal permission information, and the universal permission information includes the permission information of each of the N processes.

In embodiments of this application, when establishing the address mapping table, the memory management unit or the system memory management unit may set the universal permission information in the address mapping table to include the permission information of the plurality of processes that share the address mapping table, that is, a permission range represented by the universal permission information is greater than or equal to a sum of permission ranges of all the N processes. When the process is run, data processing may be performed based on the permission represented by the permission table, to avoid a conflict case in which a permission represented by the address mapping table is not enabled, but a permission represented by the permission table corresponding to the process is enabled. This ensures normal working of the address mapping table and the permission table.

According to a second aspect, an embodiment of this application provides a memory management apparatus. The apparatus may include: a determining module, configured to determine N processes, where virtual addresses of all the N processes are the same, physical addresses corresponding to the virtual addresses of all the processes are the same, the processes have different permissions, and N is an integer greater than or equal to 2; a first processing module, configured to establish an address mapping table and N permission tables for the N processes, where each of the processes corresponds to one of the N permission tables, the address mapping table includes a mapping relationship between the virtual address and the physical address, and each of the N permission tables includes permission information of a corresponding process at the physical address; and a second processing module, configured to: when an i^{th} process in the N processes is run, process, based on the address mapping table and a permission table corresponding to the i^{th} process, data corresponding to the physical address, where i is 1, 2, ..., or N.

In embodiments of this application, the memory management apparatus may establish the address mapping table for the N processes that have same virtual addresses corresponding to same physical addresses, but have different permissions; and establish a corresponding permission table for each process, to obtain the N permission tables. Therefore, the N processes can share the address mapping table during running. The foregoing solution is different from the conventional technology. In the conventional technology, N page tables need to be established for N processes that have same virtual addresses corresponding to same physical addresses, but have different permissions. Address information in the N page tables is the same (that is, the virtual addresses are the same, and the physical addresses corresponding to the virtual addresses are the same), and only permission information is different. However, the address information part including an address mapping relationship occupies more resources in a data structure than the permission information part. Therefore, the memory management apparatus provided in embodiments of this application separates an address information part and a permission information part, so that a plurality of processes can share the address information. This can reduce memory overheads arising from memory management, and ensure computer performance.

In a possible implementation, the second processing module is specifically configured to: determine, based on the address mapping table, a physical address that can be accessed by the i^{th} process; determine a permission of the i^{th} process based on the permission table corresponding to the i^{th} process; and perform, using the i^{th} process, processing corresponding to the permission on the data corresponding to the physical address.

In a possible implementation, the determining module is specifically configured to: obtain a virtual address of each of M processes, where M is an integer greater than or equal to N; determine a physical address corresponding to the virtual address of each of the M processes; and determine, from the M processes, the N processes that have same virtual addresses corresponding to same physical addresses.

In a possible implementation, the first processing module is specifically configured to establish the address mapping table based on the virtual addresses of the N processes and the corresponding physical addresses; and establish a permission table based on permission information of each of the N processes, to obtain the N permission tables.

In a possible implementation, each of the N permission tables includes permission start address information and permission end address information, and an address range corresponding to the permission start address information and the permission end address information of the permission table corresponding to the i^{th} process includes an address range corresponding to the physical address that can be accessed by the i^{th} process.

In a possible implementation, the address mapping table further includes universal permission information, and the universal permission information includes the permission information of each of the N processes.

According to a third aspect, an embodiment of this application provides a computer-readable storage medium, configured to store computer software instructions used by the apparatus provided in one or more implementations of the second aspect to implement the memory management method. The computer-readable storage medium includes a program designed for performing the foregoing aspect.

According to a fourth aspect, an embodiment of this application provides a computer program. The computer program includes instructions, and when the computer program is executed by a computer, the computer is enabled to perform a procedure performed by the apparatus, provided in one or more implementations of the second aspect, configured to implement the memory management method.

According to a fifth aspect, an embodiment of this application provides a terminal device. The terminal device includes a processor, and the processor is configured to support the terminal device in implementing a corresponding function in the memory management method provided in the first aspect. The terminal device may further include a storage. The storage is coupled to the processor, and stores program instructions and data that are necessary for the terminal device. The terminal device may further include a communication interface used for communication between the terminal device and another device or a communication network.

According to a sixth aspect, an embodiment of this application provides a chip system. The chip system includes a processor, configured to support a device in implementing functions in the first aspect, for example, generating or processing information in the memory management method. In a possible design, the chip system further includes a storage, and the storage is configured to store program instructions and data that are necessary for the device. The chip system may include a chip, or may include a chip and another discrete component.

### BRIEF DESCRIPTION OF DRAWINGS

To describe technical solutions in embodiments of this application or in the background more clearly, the following describes accompanying drawings for describing embodiments of this application or the background.
FIG. 1 is a diagram of a system architecture to which a memory management method is applied according to an embodiment of this application;
FIG. 2 is a schematic flowchart of a memory management method according to an embodiment of this application;
FIG. 3 is a diagram of a structure of an address mapping table according to an embodiment of this application;
FIG. 4a is a diagram of a structure of a permission table according to an embodiment of this application;
FIG. 4b is a diagram of permission division in a permission table according to an embodiment of this application;
FIG. 5 is a diagram of permission allocation according to an embodiment of this application;
FIG. 6 is a schematic flowchart of a page table walk according to an embodiment of this application;
FIG. 7a is a diagram of a structure of a page table according to an embodiment of this application;
FIG. 7b is a diagram of another structure of a page table according to an embodiment of this application;
FIG. 7c is a diagram of a structure of permission allocation according to an embodiment of this application; and
FIG. 8 is a diagram of a structure of a memory management apparatus according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth" and so on are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification means that a particular characteristic, structure, or feature described with reference to embodiments may be included in one or more embodiments of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate via a local and/or remote process and based on, for example, a signal having one or more data packets (for example, data from two components interacting with another component in a local system, a distributed system, and/or across a network such as the Internet interacting with another system based on the signal).

Some terms in this application are first described, to help a person skilled in the art have better understanding.
(1) A memory management unit (Memory Management Unit, MMU), a system memory management unit (System Memory Management Unit, SMMU), and an input/output memory management unit (Input/Output Memory Management Unit, IOMMU) are several related technologies developed with a virtual memory management (Virtual Memory Management, VMM) technology. The MMU is mainly used for translation between a virtual address (Virtual Address, VA) and a physical address (Physical Address, VA) between various processors (for example, a central processing unit (Central Processing Unit, CPU) and a graphics processing unit (Graphics Processing Unit, GPU)) and a physical memory. The SMMU and the IOMMU, which are names from different vendors, have basically the same functions and are mainly configured to perform address translation for a direct memory access (Direct Memory Access, DMA) technology. In this application, the description about the SMMU may include the meaning of the IOMMU. According to the memory management method provided in embodiments of this application, for the MMU, the SMMU, and the IOMMU, an address mapping table may be established for several processes that have same virtual addresses and same physical addresses corresponding to the virtual addresses, but have different permissions, and establish a corresponding permission table for each process, so that the several processes can share the address mapping table during running. This reduces memory overheads arising from memory management, and ensures computer performance.
(2) A page table (Page Table) is a special data structure typically stored in a page table area in a system space, includes a plurality of page table entries (Page Table Entries), for storing a correspondence between a logical (virtual) page (virtual address) and a physical page (physical address). Typically, each process has its own page table. When a plurality of processes have same virtual addresses and same physical addresses corresponding to the virtual addresses, and have same permissions at the corresponding physical addresses, the plurality of processes can share page tables. In embodiments of this application, an address mapping table may be established for several processes that have same virtual addresses and same physical addresses corresponding to the virtual addresses, but have different permissions, and a corresponding permission table is established, so that the several processes can share the address mapping table during running. This reduces memory overheads arising from memory management, and ensures computer performance.
(3) A direct memory access (Direct Memory Access, DMA) technology provides a high-speed data transmission channel between a peripheral and a physical memory or between a storage and a physical memory during copying of data from one address space to another address space, without CPU involvement in the data transfer process, and therefore resolves excessive consumption of CPU resources resulting from transferring of a large amount of data. The memory management method provided in embodiments of this application is also applicable to a case in which a plurality of peripherals or a plurality of storages access a physical memory through address translation in a DMA scenario, to reduce memory overheads arising from memory management, and ensure computer performance.
(4) "A plurality of" in this application means two or more than two. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects.

First, a technical problem to be specifically resolved in this application is analyzed and proposed. In the conventional technology, a memory management mechanism of an ARM architecture and an X86 architecture is used as an example, and a paging-based memory page table management mechanism is as described in a solution 1.

Solution 1: The page table management mechanism of the ARM architecture and the X86 architecture may typically support page tables at a plurality of granularities (granularities) such as 4 KB/16 KB/64 KB. A page table at a granularity of 4 KB is used as an example. In an address translation process, a radix tree (radix tree) mechanism is typically used for division into a four-level page table for a page table walk (Page Table Walk). A level 1 may support a block (Block)-type page table at a granularity of 1 GB, a level 2 may support a block-type page table at a granularity of 2 MB, and a level 3 may support a page (Page)-type page table at a granularity of 4 KB. In addition, a level 0, the level 1, and the level 2 also have table (table)-type page tables, and provide address pointers pointing to a next level in a radix tree. In a page table walk process, if there is a block-type page table and a page-type page table, an address translation is complete, and address information and permission information are obtained.

The solution 1 has the following disadvantages:
Disadvantage 1: Memory overheads of the page table are high. In the conventional technology, permission information and address information required by processes for running are stored in a same page table. If N processes share a physical address, N page tables corresponding to the N processes need to be copied when permission isolation is required among the processes (that is, when permissions of the processes are different). In the N page tables, address information is the same (that is, virtual addresses are the same, and physical addresses corresponding to the virtual addresses are the same), and only permission information is different. In conclusion, in the solution in the conventional technology, a condition for sharing a page table among a plurality of processes is strict, to be specific, the plurality of processes have same address information and permission information. However, for the plurality of processes having same address information but different permission information, the address information meets a condition of sharing among the plurality of processes, but memory overheads of page tables used for memory management are still in direct proportion to a quantity of processes because the permission information is different. In other words, a larger quantity of processes that are to share page tables indicates higher memory overheads of the page tables.
Disadvantage 2: Permission allocation of a process at a physical address corresponding to a virtual address needs to be aligned with a boundary of a page table, that is, a permission is allocated only based on a granularity of a page table (for example, a granularity of 4 KB/2 MB/1 GB). The granularity of permission allocation is fixed and lack flexibility such that requirements of more complex scenarios cannot be met.

In consideration of the disadvantages of high memory overheads in memory management and inflexibility in permission allocation in the conventional technology, this application actually resolves the following technical problems in the conventional technology:
Separate an address mapping table from a permission table. In embodiments of this application, an address mapping table may be established for N processes that have same virtual addresses corresponding to same physical addresses, but have different permissions; and a corresponding permission table is established, to obtain N permission tables. In this way, the N processes can share the address mapping table during running. This is different from the conventional technology. In the conventional technology, N page tables need to be established for N processes that have same virtual addresses corresponding to same physical addresses, but have different permissions. Address information in the N page tables is the same (that is, the virtual addresses are the same, and the physical addresses corresponding to the virtual addresses are the same), and only permission information is different. However, according to the memory management method provided in embodiments of this application, memory overheads arising from memory management can be reduced, and computer performance can be ensured.

Design a permission table based on a range (Range) table. In embodiments of this application, the permission table may include permission start (Base) address information and permission end (Limit) address information. The permission start address information and the permission end address information may represent address spaces of one or more ranges (Range). The permission table may have other information representing permissions of the one or more ranges. Permission allocation may not need to be aligned with a boundary of a page table. This is more flexible, and can meet requirements of more complex scenarios.

In conclusion, the memory management solution in the conventional technology has high memory overheads, which may seriously affect computer performance. Therefore, the memory management method provided in this application is used to resolve some or all of the foregoing technical problems, to reduce memory overheads arising from memory management, and ensure computer performance.

To better understand the memory management method provided in embodiments of this application, the following describes a system architecture and/or an application scenario of the memory management method provided in embodiments of this application. It may be understood that the system architecture and the application scenario that are described in embodiments of this application are intended to describe technical solutions in embodiments of this application more clearly, and do not constitute any limitation on the technical solutions provided in embodiments of this application.

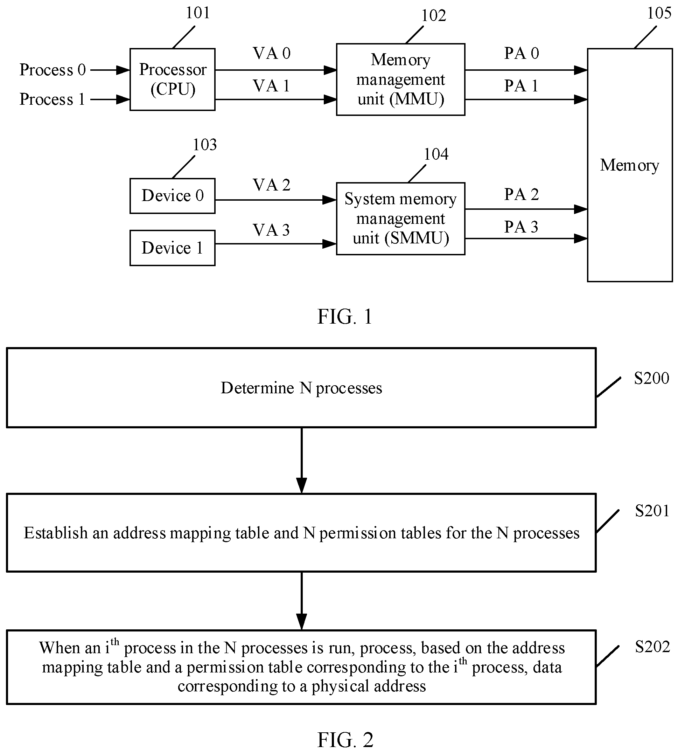

For the system architecture to which the memory management method provided in embodiments of this application may be applied, refer to FIG. 1. FIG. 1 is a diagram of a system architecture to which a memory management method is applied according to an embodiment of this application. The system architecture may include one or more processors 101, one or more memory management units 102, one or more devices 103, one or more system memory management units 104, and one or more memories 105.

The processor 101 may be a CPU, a GPU, or a processor of another type (for example, an ARM processor). The CPU is mainly configured to interpret computer instructions and process data in computer software. Operations in a computer may be as follows: The CPU is responsible for reading the instructions, decoding the instructions, executing the instructions, and putting a process into the memory 105 for running. The GPU is a microprocessor that performs an image operation in the computer, and mainly performs complex mathematical and geometric calculation, to complete graphics rendering. The process needs to be run in the memory, and the processor 101 may perform a page table walk by using the memory management unit 102, to find a physical address corresponding to a virtual address of the process. In embodiments of this application, the memory management unit 102 may establish an address mapping table for several processes that have same virtual addresses corresponding to same physical addresses, but have different permissions, and respectively establish corresponding permission tables, so that when the processor 101 runs the several processes, the address mapping table can be shared. This reduces memory overheads arising from memory management, and ensures computer performance.

The memory management unit 102 is an intermediate layer between the processor 101 and the memory 105, mainly completes translation from a virtual address to a physical address, and provides a read/write permission, attribute information, and the like. Usually, the memory management unit 102 may be encapsulated inside a chip of the processor (for example, the CPU). Therefore, the virtual address usually exists only inside the processor. When a process is run, data/instruction addresses and the like of the process are all virtual addresses. An execution unit of the processor 101 sends the virtual address, and the memory management unit 102 intercepts the virtual address, and translates the virtual address into a physical address. A process of translating the virtual address into the physical address is referred to as address translation (or mapping). In embodiments of this application, the memory management unit 102 may establish the address mapping table for the several processes that have same virtual addresses corresponding to same physical addresses, but have different permissions, and respectively establish corresponding permission tables, so that when the processor 101 runs the several processes, the address mapping table can be shared. In other words, when the several processes are run, translation from the virtual address to the physical address can be completed based on the address mapping table, and a corresponding address table does not need to be established for each process. This reduces memory overheads arising from memory management, and ensures computer performance.

The device 103 mainly includes external devices with various functions, for example, a timer (TIM), a universal receiver/transmitter (USART), and an analog-to-digital converter (ADC). The device 103 may bypass the processor 101, and directly access the memory 105 by using a DMA technology. In a process in which the device 103 accesses the memory 105, translation from a virtual address to a physical address is also involved, and is mainly performed by the system memory management unit 104. In embodiments of this application, when virtual addresses of a plurality of devices 103 are the same, and the virtual addresses correspond to same physical addresses, but permissions are different, the system memory management unit 104 may establish an address mapping table for the plurality of devices 103, and respectively establish corresponding permission tables, so that when processes corresponding to the plurality of devices are run, the address mapping table can be shared. In other words, when the processes corresponding to the plurality of devices are run, translation from the virtual address to the physical address can be completed based on the address mapping table, and a corresponding address table does not need to be established for a process of each device. This reduces memory overheads arising from memory management, and ensures computer performance.

The system memory management unit 104 is an intermediate layer between the device 103 and the memory 105, has same functions as the memory management unit, mainly completes translation from a virtual address to a physical address, and provides a read/write permission, attribute information, and the like. The system memory management unit 104 serves the device 103, and the memory management unit 102 serves the processor 101. In embodiments of this application, when the virtual addresses of the plurality of devices 103 are the same, and the virtual addresses correspond to the same physical addresses, but the permissions are different, the system memory management unit 104 may establish the address mapping table for the plurality of devices 103, and respectively establish corresponding permission tables, so that when processes corresponding to the plurality of devices are run, the address mapping table can be shared. In other words, when the processes corresponding to the plurality of devices are run, translation from the virtual address to the physical address can be completed based on the address mapping table, and a corresponding address table does not need to be established for a process of each device. This reduces memory overheads arising from memory management, and ensures computer performance. It should be noted that the system memory management unit 104 mentioned in this application subsequently includes a meaning of an input/output memory management unit (IOMMU).

The memory 105 is a location where a process and data are temporarily stored, and is usually referred to as a main memory. The memory 105 is a storage space that can be directly addressed by the processor 101 or the device 103, and is made of a semiconductor device. Usually, the memory is characterized by a small capacity and a high access speed, and only temporarily stores information (data processed by the processor), and the information disappears after the memory is powered off. However, because the memory has a small capacity, and an insufficient memory space may seriously affect computer performance, reducing memory overheads becomes an important way to ensure computer performance. In embodiments of this application, when virtual addresses of a plurality of processes (including a process via which the processor accesses the memory, and a process corresponding to a memory accessed by the device) correspond to same physical addresses, it means that the plurality of processes finally access same physical memories. If the virtual addresses of the plurality of processes are the same, but permissions are different, may establish an address mapping table for the plurality of processes, and respectively establish corresponding permission tables, so that when the plurality of processes are run, the address mapping table can be shared. In other words, when the plurality of processes are run, translation from the virtual address to the physical address can be completed based on the address mapping table, and a corresponding address table does not need to be established for each process. This reduces memory overheads arising from memory management, and ensures computer performance.

It should be noted that embodiments of this application may be applied to various computer system architectures. The computer architecture in the foregoing figure is merely an example implementation in embodiments of this application. An architecture to which embodiments of this application can be applied includes but is not limited to the foregoing architecture. It should be understood that the computer architecture may have more or fewer units/modules than those shown in the figure, or may combine two or more units/modules, or may have different unit/module configurations. Various units/modules shown in the figure may be implemented in hardware, software, or a combination of hardware and software. The hardware, software, or the combination of hardware and software include one or more signal processing and/or application-specific integrated circuits.

Based on the diagram of the architecture provided in FIG. 1, with reference to the memory management method provided in this application, the following specifically analyzes and resolves the technical problems proposed in this application.

FIG. 2 is a schematic flowchart of a memory management method according to an embodiment of this application. The method may be applied to the memory management unit 102 and/or the system memory management unit 104 in FIG. 1, that is, the memory management unit 102 and/or the system memory management unit 104 may be configured to support and perform step S200 to step S202 in a method procedure shown in FIG. 2. Step S200 to step S202 are as follows:
Step S200: Determine N processes.

Specifically, the memory management unit 102 or the system memory management unit 104 may determine the N processes. Virtual addresses of all the N processes are the same, physical addresses corresponding to the virtual addresses of all the processes are the same, N is an integer greater than or equal to 2, and the N processes have different permissions. For ease of understanding, in this embodiment of this application, a value 10 of N is used as an example. It may be understood that the quantity N of processes that have same virtual addresses corresponding to same physical addresses, but only have different permissions may alternatively be another value. This is not specifically limited herein. It should be noted that the memory management unit 102 or the system memory management unit 104 may determine the N processes at a time, or may gradually determine one or more processes until the N processes are determined. This is not specifically limited herein.

In a possible implementation, the memory management unit 102 or the system memory management unit 104 may determine, from M processes, the N processes that have same virtual addresses corresponding to same physical addresses, but have different permissions, where M is an integer greater than or equal to N. Optionally, the memory management unit 102 or the system memory management unit 104 may obtain a virtual address of each of the M processes; then, determine a physical address corresponding to the virtual address of each of the M processes; and finally determine, from the M processes, the N processes that have same virtual addresses corresponding to same physical addresses. For ease of understanding, in this embodiment of this application, a value 20 of M is used as an example. It may be understood that M may alternatively be another value greater than or equal to N. This is not specifically limited herein. It may be understood that, in a process in which a system determines to construct a process based on a specific reason (for example, system initialization or a system call), the memory management unit 102 or the system memory management unit 104 may obtain a virtual address of the process, and may allocate a physical address (corresponding to a specific physical memory block whose size may be 4 KB, 2 MB, 1 GB, or the like) to the process based on an actual situation of the memory. For example, the value of M is 20, and the value of N is 10. The system may construct 20 processes, and the memory management unit 102 or the system memory management unit 104 may obtain virtual addresses of the 20 processes, respectively allocate physical addresses to the processes, and provide permissions. Therefore, if 10 processes that have same virtual address corresponding to same physical address, but have different permissions exist in the 20 processes, the memory management unit 102 or the system memory management unit 104 can determine the 10 processes before establishing an address mapping table and permission tables. It should be noted that the memory management unit 102 or the system memory management unit 104 may simultaneously obtain the virtual addresses of the M processes, and then determine a physical address corresponding to the virtual address; or may gradually obtain virtual addresses of one or more processes, and then determine a physical address corresponding to the virtual address until the virtual addresses of the M processes and the physical addresses corresponding to the virtual addresses are determined. This is not specifically limited herein.

Step S201: Establish an address mapping table and N permission tables for the N processes.

Specifically, the memory management unit 102 or the system memory management unit 104 may establish the address mapping table for the N processes that have same virtual addresses corresponding to same physical addresses, but have different permissions, and establish a permission table corresponding to each of the N processes, that is, there are N permission tables in total. Each of the N processes corresponds to one of the N permission tables, the address mapping table includes a mapping relationship between the virtual address and the physical address, and each of the N permission tables includes permission information of a corresponding process at the physical address. For ease of understanding, the value 10 of N is still used as an example, that is, there are 10 processes that have same virtual addresses corresponding to same physical addresses, but have different permissions. The memory management unit 102 or the system memory management unit 104 establishes one address mapping table and 10 permission tables for the 10 processes, where each of the 10 processes corresponds to one of the 10 permission tables. Optionally, after determining the N processes, the memory management unit 102 or the system memory management unit 104 may establish the address mapping table and the corresponding N permission tables for the N processes; or may establish an address mapping table and a permission table for a 1^{st} process, and then after gradually determining one or more processes that have same virtual addresses, corresponding to same physical addresses, as those of the 1^{st} process, but have different permissions, establish a corresponding permission table until the N permission tables are established to correspond to the N processes that have same virtual addresses corresponding to same physical addresses, but have different permissions. This is not specifically limited herein.

In a possible implementation, after determining the virtual addresses of the N processes, the physical addresses corresponding to the virtual addresses, and the permissions, the memory management unit 102 or the system memory management unit 104 may establish the address mapping table based on the virtual addresses and the corresponding physical addresses, and establish a permission table based on the permission corresponding to each of the N processes, to obtain the N permission tables. In other words, the address mapping table includes information about the virtual addresses and information about the physical addresses corresponding to the virtual addresses of the N processes, and the permission tables include the permissions of the corresponding processes. When running the process, the system initiates access based on the virtual address, and the memory management unit 102 or the system memory management unit 104 determines, by walking the address mapping table and the permission table, the physical address corresponding to the virtual address and the permission corresponding to the process.

Optionally, the address mapping table may further include universal permission information. The universal permission information includes permission information of each of the N processes, that is, a permission range represented by the universal permission information is greater than or equal to a sum of permission ranges of the N processes. For example, a permission of a process 1 is read, and a permission of a process 2 is write. At least read and write permissions need to be enabled in the universal permission information in the address mapping table. If another process sharing the address mapping table has another different permission, the another permission needs to be correspondingly enabled in the universal permission information in the address mapping table. It may be understood that when the process is run, an actual processing permission is the same as a permission represented by the permission table corresponding to the process, instead of a permission represented by the universal permission information in the address mapping table.

In a possible implementation, the plurality of processes constructed by the system may further include K processes, where K is an integer greater than or equal to 1. Virtual addresses of the K processes are the same as a virtual address of a process (for example, a process n) in the N processes, physical addresses corresponding to the virtual addresses are the same as a physical address corresponding to the virtual address, and permissions are also the same as a permission of the process. Optionally, the K processes may share the address mapping table with the N processes, and the K processes may share a permission table (namely, a permission table corresponding to the process n) with the process n. There is no need to establish an address mapping table and permission tables for the K processes, to further reduce memory overheads. For example, a value of K is 2, and the value of N is 10. Virtual addresses of the two processes are the same as a virtual address of a process (for example, a process 8) in the 10 processes, physical addresses corresponding to the virtual addresses are the same as a physical address corresponding to the virtual address, and permissions of the two processes are the same as a permission of the process. In this case, the two processes share the address mapping table and permission tables with the process 8. In other words, only one address mapping table and 10 permission tables may be established for 12 processes in total. It may be understood that K and N may alternatively be other values. This is not specifically limited herein.

Step S202: When an i^{th} process in the N processes is run, process, based on the address mapping table and a permission table corresponding to the i^{th} process, data corresponding to the physical address.

Specifically, after the memory management unit 102 or the system memory management unit 104 establishes the address mapping table and the corresponding permission tables for the N processes, when the system runs the i^{th} process in the N processes, the system may process, based on the address mapping table and the permission table corresponding to the i^{th} process, the data corresponding to the physical address, where a processing permission is the same as a permission represented by the permission table, and i is 1, 2, ..., or N. In other words, when running any one of the N processes, the system may control, based on the address mapping table and a permission table corresponding to the process, the process to perform processing corresponding to a permission represented by the permission table on data corresponding to the physical address. It should be noted that the address mapping table and the permission tables may be stored in a memory. When running a process, the system may perform walking based on the physical addresses in the address mapping table and the permission tables that are stored in a process descriptor of the process.

Optionally, when the system runs the i^{th} process in the N processes, the memory management unit 102 or the system memory management unit 104 may determine, based on the address mapping table, a physical address that can be accessed by the i^{th} process; then, determine a permission of the i^{th} process based on the permission table corresponding to the i^{th} process; and finally process the data corresponding to the physical address using the i^{th} process, where the processing permission is the same as the permission represented by the permission table.

The foregoing describes the procedure of the memory management method provided in embodiments of this application. The following describes structures of the address mapping table and the permission tables that are used in the memory management method in this application, and effect of memory management performed according to the memory management method provided in embodiments of this application.

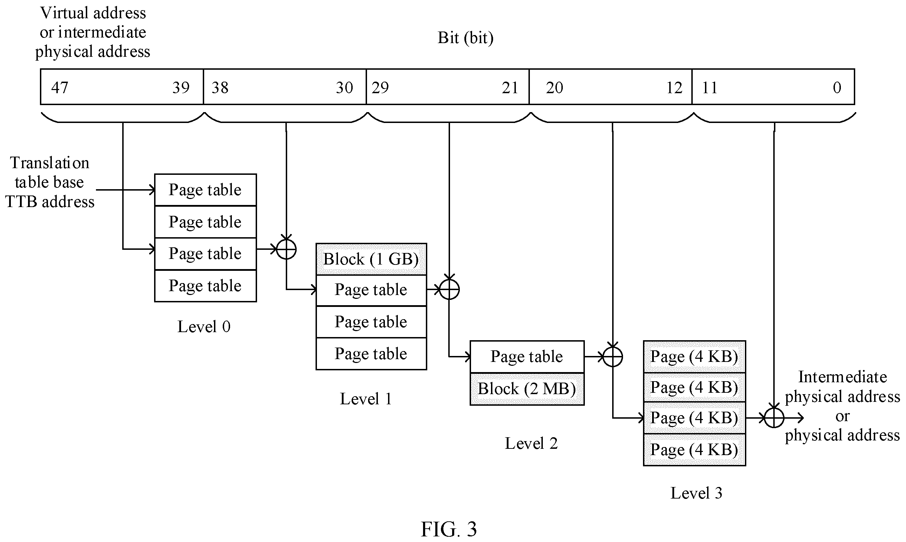

Memory management in an SMMU scenario is used as an example for brief description. The following first briefly describes a structure of the address mapping table. FIG. 3 is a diagram of a structure of an address mapping table according to an embodiment of this application. A system is a 64-bit system, a page table is at a granularity of 4 KB, the page table is a four-level page table, and [47:0] indicates a width of a virtual address. The width of the virtual address may alternatively be [42:0], [39:0], or [36:0], that is, not all bits of a 64-bit virtual address need to be used (this is described by using an example of the 64-bit system, and for a 32-bit system, a width of a virtual address may be set to another value). Address translation may be completed based on a translation table base address and an offset of the page table. Address translation at each level may have 9 bits (that is, may have 512 entries (entries)). VA[47:39] is an index of a level-0 page table, and each entry of the level-0 page table may correspond to a 512 GB address range, and points to a level-1 page table (corresponding to VA[38:30]). The level-1 page table may also have 512 entries, and each entry points to a level-2 page table (corresponding to VA[29:21]) or a 1 GB block. An entry of the level-2 page table may point to a level-3 page table (corresponding to VA[20:12]) or a 2 MB block. An entry of the level-3 page table may point to a base address of a 4 KB page. VA[11:0] may include offset information. It may be understood that VA[63:48] in the address mapping table may further include universal permission information, attribute information, and the like. Optionally, permissions represented by the universal permission information may include permissions of a plurality of processes that share the address mapping table. It should be noted that the address mapping table provided in embodiments of this application may also be applied to a 32-bit system. The page table may alternatively support another granularity (for example, 16 KB, 64 KB, 2 MB, or 1 GB), or may support a design in which a plurality of different granularities coexist. The page table may alternatively have two levels, three levels, or more or fewer levels. This is not specifically limited herein. In addition, the address mapping table used in the memory management method is a page table that supports paging. It may be understood that the address mapping table used in embodiments of this application may alternatively be a segmented table that supports segment management or a segmented page table combining segmentation and paging. In other words, an address space division idea used to obtain the address mapping table is not specifically limited herein, provided that the address mapping table used in embodiments of this application can be used to complete address translation.

The permission table in embodiments of this application may include permission information of a process corresponding to the permission table, so that a memory management unit (MMU) or a system memory management unit (SMMU) may determine a permission of the process corresponding to the permission table when walking the permission table.

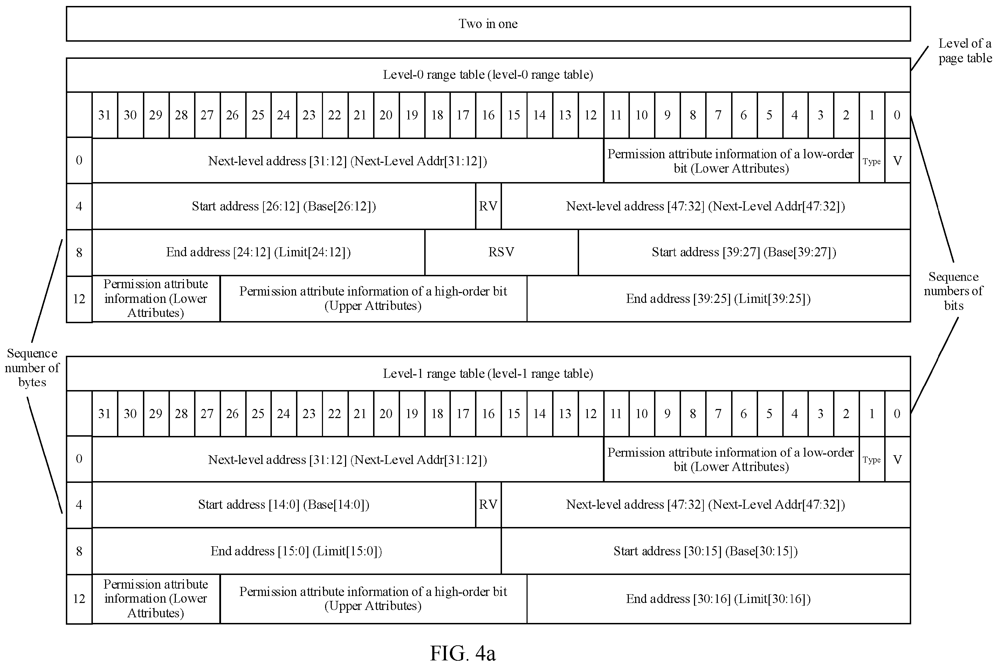

In a possible implementation, the permission table may be designed based on a range (range) table, that is, the permission table may include permission start (base) address information and permission end (limit) address information (both a start address and an end address may be virtual addresses), so that the permission table can flexibly specify permission information of any one or more address ranges, and can also provide an address pointer pointing to a next level in a radix tree (radix tree). For a data structure of the permission table designed based on the range table, refer to FIG. 4a. FIG. 4a is a diagram of a structure of a permission table according to an embodiment of this application. The permission table is a two-level table. Because the permission table needs to flexibly represent any one or more address ranges, information in an entry usually needs to correspond to more pages (pages) and blocks (blocks) than those in a conventional page table. For example, the conventional page table supports 8 bytes. The permission table provided in this embodiment of this application may be extended to 16 bytes (or more, which is usually a multiple of the conventional page table), to represent more information. In consideration of compatibility between the page and the block, in this embodiment of this application, two adjacent 8-byte page tables may be combined into one 16-byte page table, and a total size of a page table at each level may remain unchanged. A flag bit may be set in the permission table. Before searching each level in the radix tree (radix tree), the MMU or the SMMU cannot determine whether a to-be-obtained page table is a permission table designed based on the range table or a conventional page table. Therefore, the MMU or the SMMU needs to obtain the page table at a granularity of at least 16 bytes (or more, which may be configured based on a size of the permission table) each time through software configuration. In this case, when performing a page table walk at a granularity of 16 bytes, the MMU or the SMMU may determine, based on the flag bit, whether a read page table is one 16-byte permission table designed based on the range table or two 8-byte conventional page tables. In addition, the data structure of the permission table may further include the following fields:
V: a valid bit that is the same as that of the conventional page table;
Type: a field that may be ignored, where the data structure of the permission table needs to be compatible with a data structure of the conventional page table;
Lower Attribute: permission attribute information of a low-order bit;
Next_level_addr: a base address of a next-level page table walk (page table walk), which is the same as that of the conventional page table;
Base: a start address of a range (range) permission allocation range (range);
Limit: an end address of the range (range) permission allocation range (range);
Upper Attribute: permission attribute information of a high-order bit; and
Table Attribute: permission attribute information of the table (table).

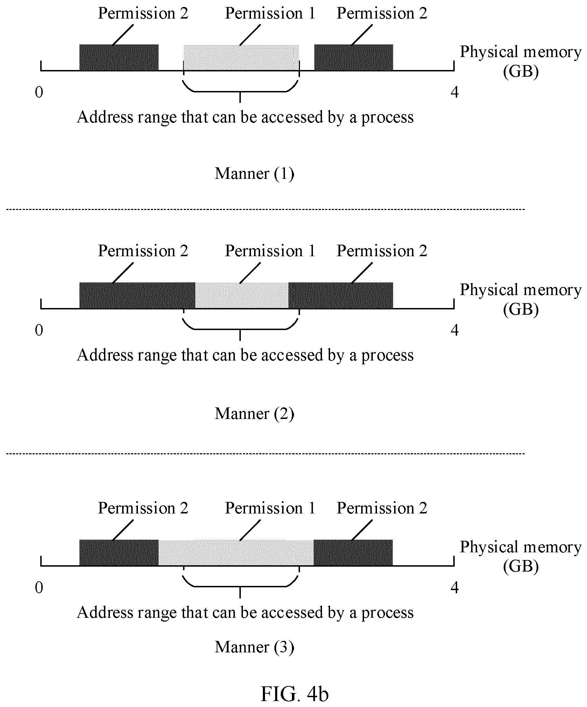

It should be noted that, when the permission table is designed based on the range (range) table, the permission table can flexibly specify any one or more address ranges, and each address range corresponds to permission information. The address range corresponding to the permission start address information and the permission end address information of the permission table corresponding to the i^{th} process may usually include the address range corresponding to the physical address that can be accessed by the i^{th} process. FIG. 4b is a diagram of permission division in a permission table according to an embodiment of this application. In one or more address ranges specified in the permission table, an address range may be the same as an address range that can be accessed by a process (for example, a manner (1) in FIG. 4b). In one or more address ranges specified in the permission table, an address range is smaller than an address range that can be accessed by a process, but is continuous with another specified address range, so that the process has a plurality of different permissions in the address range that can be accessed by the process (for example, a manner (2) in FIG. 4b). In one or more address ranges specified in the permission table, an address range is greater than an address range that can be accessed by a process (for example, a manner (3) in FIG. 4b). The address range of the permission and the address range that can be accessed by the process are set, so that permission allocation is more flexible while normal work of the process can be ensured. This can meet requirements of more complex scenarios.

Herein, a walk process of the permission table is also briefly described. When a virtual address (VA) hits a range represented by Base and Limit in the permission table designed based on the range table (range table), it indicates that the range table is hit, and the permission information in the range table may be directly obtained. If the range represented by Base and Limit is not hit, it indicates that the range table is missed (miss), and Next_level_addr in the range table may be used to continue to search a next level in the radix tree (radix tree) until a hit occurs or an interrupt is triggered.

A two-level page table is used as an example. Walk and comparison processes of the permission table designed based on the range table (range table) are as follows:
When a level-0 range table is hit,
Base[39:12]<=VA[39:12]<=Limit[39:12] is met, and the permission information in the permission table is directly returned; and
when a level-1 range table is hit,
   (1) if permission division is performed at a granularity of 4 KB, Base[30:12]<=VA[30:12]<=Limit[30:12] is met, and the permission information in the permission table is directly returned; or
   (2) if permission division is performed at a granularity of 1 byte, Base[30:0]<=VA[30:0]<=Limit[30:0] is met, and the permission information in the permission table is directly returned.

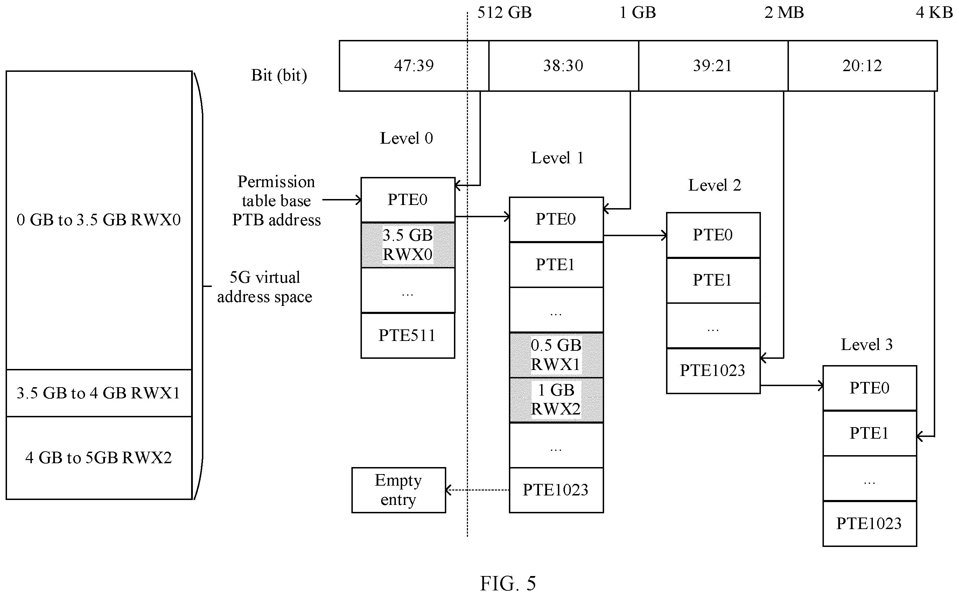

For ease of understanding, a four-level page table is used as an example to briefly describe the permission table provided in embodiments of this application. FIG. 5 is a diagram of permission allocation according to an embodiment of this application. A granularity of 4 KB is used as an example. It is assumed that a system allocates a 5 GB virtual address space to a process. A permission of the process in an address space from 0 GB to 3.5 GB is RWX0, a permission of the process in an address space from 3.5 GB to 4 GB is RWX1, and a permission of the process in an address space from 4 GB to 5 GB is RWX2. A 3.5 GB permission range (or permission block) in which a permission is RWX0 is allocated to a level 0 in the permission table, and a 0.5 GB permission range (or permission block) in which a permission is RWX1 and a 1 GB permission range (or permission block) in which a permission is RWX2 are allocated to a level 1 in the permission table, to complete permission allocation of the process in the 5 GB virtual address space based on the permission table. It may be understood that, if a granularity of permission allocation is smaller (for example, 2 MB, 1 MB, 64 KB, 16 KB, or 4 KB), allocation may be performed based on page table entries at a level 2 and a level 3.

In conclusion, in comparison with a memory management mechanism in the conventional technology, in embodiments of this application, the permission information and the address information that are used for running of the process are separated, to obtain the address mapping table and the permission table. This is different from the conventional technology in which permission information and address information are stored in a same page table. Therefore, a plurality of processes that have same virtual addresses corresponding to same physical addresses, but have different permissions can share one address mapping table, to reduce memory overheads of the memory management method.

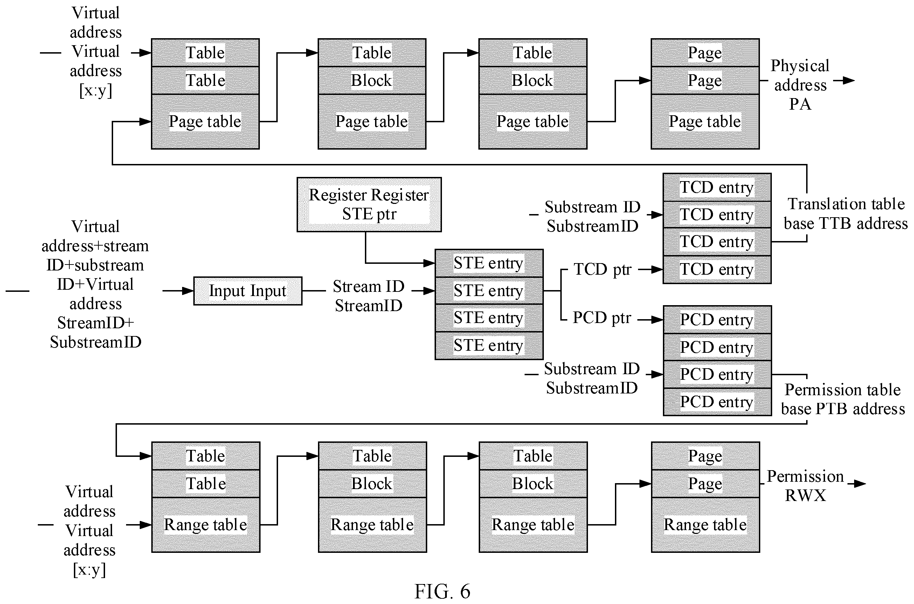

Based on the address mapping table and the permission table provided in the memory management method in embodiments of this application, for a specific page table walk procedure, refer to FIG. 6. FIG. 6 is a schematic flowchart of a page table walk according to an embodiment of this application. An SMMU scenario is used as an example. First, a page table configuration (Configuration) lookup is performed. This step is to obtain entrance information of an address mapping table and a permission table, and may specifically be obtaining an STE based on a stream ID (StreamID) and a stream table entry (Stream Table Entry, STE) start address register (namely, Register STE ptr), and after obtaining the STE, obtaining entrance information (including TCD ptr and PCD ptr) of a next-level configuration lookup. Then, a translation context descriptor (Translation Context Descriptor, TCD) and a permission context descriptor (Protection Context Descriptor, PCD) may be obtained based on a substream ID (SubStreamID) and a base address of the entrance information, in the STE, of the next-level configuration lookup. Further, a translation table base (Translation Table Base, TTB) address and a permission table base (Protection Table Base, PTB) address that are used for address translation and permission translation may be obtained. The configuration lookup is completed. Then, the address mapping table and the permission table may be walked based on the virtual address, the translation table base address, and the permission table base address respectively, to determine a physical address (PA) based on the address mapping table, and determine a permission (RWX) based on the permission table. Walking of the address mapping table and the permission table may be performed in parallel or in sequence. This is not specifically limited herein.

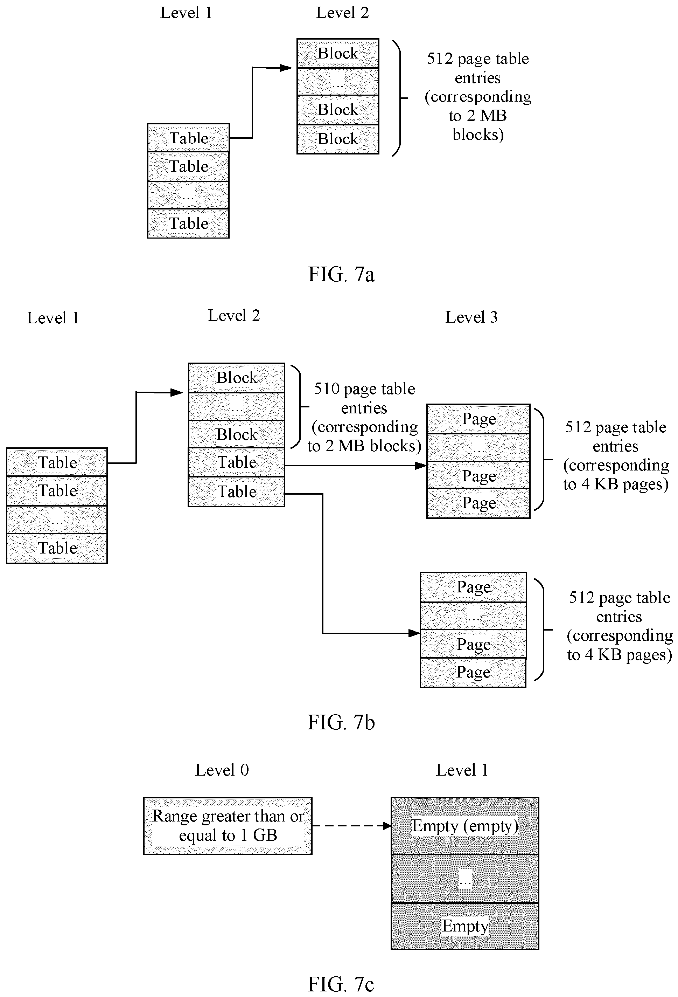

The following briefly describes effect of the memory management method provided in embodiments of this application. A page table at a granularity of 4 KB is used as an example. It is assumed that 10 processes have same virtual addresses (for example, corresponding to a 1 GB address space) corresponding to same physical addresses, but have different permissions. In other words, the 10 processes want to share a 1 GB memory space, and permission isolation needs to be performed between the 10 processes. However, if there is no continuous 1 GB physical space in a physical memory, based on the memory page table management mechanism in the conventional technology, one page table needs to be established for each of the 10 processes. For a structure of the established page table, refer to FIG. 7a. FIG. 7a is a diagram of a structure of a page table according to an embodiment of this application. A level 0 is not shown. At least 512 page table entries with a size of 2 MB need to be established at a level 2, to meet a requirement of a 1 GB physical space of a process. Because memory overheads of the process require at least 512 page table entries, and permission isolation is performed on the 10 processes, about 5120 page table entries need to be established to meet the requirement. If memory fragmentation is more severe, that is, there is no continuous memories at a granularity of 2 MB in the memory, more pages at a smaller granularity are used for storage. Consequently, page table entries surge accordingly, and overheads of the page table for the memory are larger. FIG. 7b is a diagram of another structure of a page table according to an embodiment of this application. A level 0 is not shown. If there are only 510 2 MB blocks in the memory, and a process needs a 1 GB space, the remaining two 2 MB spaces point to a level 3, and 512*2 page table entries with a size of 4 KB need to be established at the level 3, to meet the requirement. In this case, a quantity of page table entries reaches 15360, which increases memory overheads.

However, if the memory management method provided in embodiments of this application is used in this scenario, after address information and permission information are separated in an address mapping table and a permission table, all of the 10 processes may share the address mapping table that includes 512 page table entries with a size of 2 MB at a level 2. In addition, based on a different permission of each process, a permission table that is designed based on a range (range) table and that includes the 1 GB space may be established for each process. FIG. 7c is a diagram of a structure of permission allocation according to an embodiment of this application. One address range greater than or equal to the 1 GB space or a plurality of address ranges greater than or equal to the 1 GB space may be obtained through division at a level 0, and a permission corresponding to a process is allocated. In this case, if the address range greater than or equal to the 1 GB space is obtained through division at the level 0, memory overheads of the page table entries become 1*512+10*1=522, and a ratio of memory overheads in the memory management solution in the conventional technology to memory overheads in the memory management method provided in embodiments of this application is approximately 10:1. It may be understood that, when a quantity of processes that need to share page tables increases, or memory fragmentation of a physical space is more severe, the memory management method provided in embodiments of this application can bring more memory benefits.

The foregoing describes the method in embodiments of this application in detail. The following provides several related apparatuses in embodiments of this application.

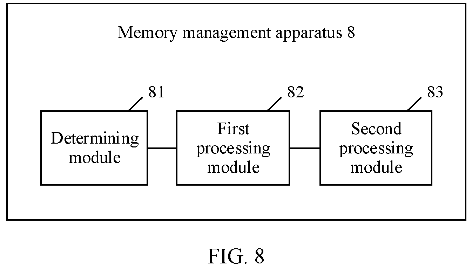

FIG. 8 is a diagram of a structure of a memory management apparatus according to an embodiment of this application. The memory management apparatus 8 may include a determining module 81, a first processing module 82, and a second processing module 83. The units are described in detail below.

The determining module 81 is configured to determine N processes. Virtual addresses of all the N processes are the same, physical addresses corresponding to the virtual addresses of all the processes are the same, the processes have different permissions, and N is an integer greater than or equal to 2.

The first processing module 82 is configured to establish an address mapping table and N permission tables for the N processes. Each process corresponds to one of the N permission tables, the address mapping table includes a mapping relationship between the virtual address and the physical address, and each of the N permission tables includes permission information of a corresponding process at the physical address.

The second processing module 83 is configured to: when an i^{th} process in the N processes is run, process, based on the address mapping table and a permission table corresponding to the i^{th} process, data corresponding to the physical address, where i is 1, 2, ..., or N.

In embodiments of this application, the memory management apparatus may establish the address mapping table for the N processes that have same virtual addresses corresponding to same physical addresses, but have different permissions; and establish a corresponding permission table for each process, to obtain the N permission tables. Therefore, the N processes can share the address mapping table during running. The foregoing solution is different from the conventional technology. In the conventional technology, N page tables need to be established for N processes that have same virtual addresses corresponding to same physical addresses, but have different permissions. Address information in the N page tables is the same (that is, the virtual addresses are the same, and the physical addresses corresponding to the virtual addresses are the same), and only permission information is different. However, the address information part including an address mapping relationship occupies more resources in a data structure than the permission information part. Therefore, the memory management apparatus provided in embodiments of this application separates an address information part and a permission information part, so that a plurality of processes can share the address information. This can reduce memory overheads arising from memory management, and ensure computer performance.

In a possible implementation, the second processing module 83 is specifically configured to:
determine, based on the address mapping table, a physical address that can be accessed by the i^{th} process;
determine a permission of the i^{th} process based on the permission table corresponding to the i^{th} process; and
perform, using the i^{th} process, processing corresponding to the permission on the data corresponding to the physical address.

In a possible implementation, the determining module 81 is specifically configured to:
obtain a virtual address of each of M processes, where M is an integer greater than or equal to N;
determine a physical address corresponding to the virtual address of each of the M processes; and
determine, from the M processes, the N processes that have same virtual addresses corresponding to same physical addresses.

In a possible implementation, the first processing module 82 is specifically configured to:
establish the address mapping table based on the virtual addresses of the N processes and the corresponding physical addresses; and
establish a permission table based on permission information of each of the N processes, to obtain the N permission tables.

In a possible implementation, each of the N permission tables includes permission start address information and permission end address information, and an address range corresponding to the permission start address information and the permission end address information of the permission table corresponding to the i^{th} process includes an address range corresponding to the physical address that can be accessed by the i^{th} process.

In a possible implementation, the address mapping table further includes universal permission information, and the universal permission information includes the permission information of each of the N processes.

It should be noted that, for functions of functional units/modules of the memory management apparatus 8 described in embodiments of this application, refer to related descriptions in the foregoing method embodiments. Details are not described herein again.

It should be noted that the memory management apparatus described in this application is not limited thereto. The memory management apparatus may be located in any electronic device, for example, various devices such as a laptop, a computer, a mobile phone, a tablet computer, or a server. The memory management apparatus may be specifically a chip, a chipset, or a circuit board on which a chip or a chipset is mounted. The chip, the chip set, or the circuit board on which the chip or the chip set is mounted may work when driven by necessary software. For example, the GPU may be:
(1) an independent integrated circuit IC, a chip, or a chip system or subsystem;
(2) a set including one or more ICs, where optionally, the set of ICs may further include a storage component configured to store data and a computer program;
(3) a module that can be embedded in another device; and
(4) another device or the like.

An embodiment of this application further provides a computer-readable storage medium. The computer-readable storage medium stores computer program code. When a processor executes the computer program code, an electronic device performs the method in any one of the foregoing embodiments.

An embodiment of this application further provides a terminal device. The terminal device may exist in a product form of a chip, the terminal device includes a processor, and the processor is configured to support the terminal device in implementing a corresponding function in the method in any one of the foregoing embodiments. The terminal device may further include a storage. The storage is coupled to the processor, and stores program instructions and data that are necessary for the terminal device. The terminal device may further include a communication interface used for communication between the terminal device and another device or a communication network.

An embodiment of this application further provides a computer program product. When the computer program product runs on a computer, the computer is enabled to perform the method in any of the foregoing embodiments.

An embodiment of this application provides a chip system. The chip system includes a processor, configured to support a device in implementing functions in the foregoing embodiments, for example, generating or processing information in the memory management method. In a possible design, the chip system further includes a storage, and the storage is configured to store program instructions and data that are necessary for the device. The chip system may include a chip, or may include a chip and another discrete component.

In the foregoing embodiments, the description of each embodiment has respective focuses. For a part that is not described in detail in an embodiment, refer to related descriptions in other embodiments.

It should be noted that, for brief description, the foregoing method embodiments are represented as a series of actions. However, a person skilled in the art should appreciate that this application is not limited to the described order of the actions, because according to this application, some steps may be performed in other orders or simultaneously. It should be further appreciated by a person skilled in the art that embodiments described in this specification all belong to example embodiments, and the involved actions and modules are not necessarily required by this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the foregoing integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like, and may be specifically a processor in the computer device) to perform all or some of the steps of the methods described in embodiments of this application. The foregoing storage medium may include: any medium that can store program code, such as a USB flash drive, a removable hard disk, a magnetic disk, an optical disc, a read-only memory (Read-Only Memory, ROM), or a random access memory (Random Access Memory, RAM).

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application.

## Claims

1. A memory management method, comprising:
determining N processes, wherein virtual addresses of all the N processes are the same, physical addresses corresponding to the virtual addresses of all the processes are the same, the processes have different permissions, and N is an integer greater than or equal to 2;
establishing an address mapping table and N permission tables for the N processes, wherein each of the processes corresponds to one of the N permission tables, the address mapping table comprises a mapping relationship between the virtual address and the physical address, and each of the N permission tables comprises permission information of a corresponding process at the physical address; and
when an i^{th} process in the N processes is run, processing, based on the address mapping table and a permission table corresponding to the i^{th} process, data corresponding to the physical address, wherein i is 1, 2, ..., or N.

2. The method according to claim 1, wherein the processing, based on the address mapping table and a permission table corresponding to the i^{th} process, data corresponding to the physical address comprises:
determining, based on the address mapping table, a physical address that can be accessed by the i^{th} process;
determining a permission of the i^{th} process based on the permission table corresponding to the i^{th} process; and
performing, using the i^{th} process, processing corresponding to the permission on the data corresponding to the physical address.

3. The method according to claim 1 or 2, wherein the determining N processes comprises:
obtaining a virtual address of each of M processes, wherein M is an integer greater than or equal to N;
determining a physical address corresponding to the virtual address of each of the M processes; and
determining, from the M processes, the N processes that have same virtual addresses corresponding to same physical addresses.

4. The method according to any one of claims 1 to 3, wherein the establishing an address mapping table and N permission tables for the N processes comprises:
establishing the address mapping table based on the virtual addresses of the N processes and the corresponding physical addresses; and
establishing a permission table based on permission information of each of the N processes, to obtain the N permission tables.

5. The method according to any one of claims 1 to 4, wherein each of the N permission tables comprises permission start address information and permission end address information, and an address range corresponding to the permission start address information and the permission end address information of the permission table corresponding to the i^{th} process comprises an address range corresponding to the physical address that can be accessed by the i^{th} process.

6. The method according to any one of claims 1 to 5, wherein the address mapping table further comprises universal permission information, and the universal permission information comprises the permission information of each of the N processes.

7. A memory management apparatus, comprising:
a determining module, configured to determine N processes, wherein virtual addresses of all the N processes are the same, physical addresses corresponding to the virtual addresses of all the processes are the same, the processes have different permissions, and N is an integer greater than or equal to 2;
a first processing module, configured to establish an address mapping table and N permission tables for the N processes, wherein each of the processes corresponds to one of the N permission tables, the address mapping table comprises a mapping relationship between the virtual address and the physical address, and each of the N permission tables comprises permission information of a corresponding process at the physical address; and
a second processing module, configured to: when an i^{th} process in the N processes is run, process, based on the address mapping table and a permission table corresponding to the i^{th} process, data corresponding to the physical address, wherein i is 1, 2, ..., or N.

8. The apparatus according to claim 7, wherein the second processing module is specifically configured to:
determine, based on the address mapping table, a physical address that can be accessed by the i^{th} process;
determine a permission of the i^{th} process based on the permission table corresponding to the i^{th} process; and
perform, using the i^{th} process, processing corresponding to the permission on the data corresponding to the physical address.

9. The apparatus according to claim 7 or 8, wherein the determining module is specifically configured to:
obtain a virtual address of each of M processes, wherein M is an integer greater than or equal to N;
determine a physical address corresponding to the virtual address of each of the M processes; and
determine, from the M processes, the N processes that have same virtual addresses corresponding to same physical addresses.

10. The apparatus according to any one of claims 7 to 9, wherein the first processing module is specifically configured to:
establish the address mapping table based on the virtual addresses of the N processes and the corresponding physical addresses; and
establish a permission table based on permission information of each of the N processes, to obtain the N permission tables.

11. The apparatus according to any one of claims 7 to 10, wherein each of the N permission tables comprises permission start address information and permission end address information, and an address range corresponding to the permission start address information and the permission end address information of the permission table corresponding to the i^{th} process comprises an address range corresponding to the physical address that can be accessed by the i^{th} process.

12. The apparatus according to any one of claims 7 to 11, wherein the address mapping table further comprises universal permission information, and the universal permission information comprises the permission information of each of the N processes.

13. A computer-readable storage medium, comprising instructions, wherein when the instructions are run on a computer, the computer is enabled to perform the method according to any one of claims 1 to 6.

14. A computer program, wherein the computer program comprises instructions, and when the computer program is executed by a computer, the computer is enabled to perform the method according to any one of claims 1 to 6.

15. A terminal device, comprising a processor and a storage, wherein the storage is configured to store program code, and when the program code is executed by the processor, the terminal device implements the method according to any one of claims 1 to 6.

16. A chip system, wherein the chip system comprises at least one processor, a storage, and an interface circuit, the storage, the interface circuit, and the at least one processor are interconnected through a line, the at least one storage stores instructions, and when the instructions are executed by the processor, the method according to any one of claims 1 to 6 is implemented.
